# EUROPEAN PATENT SPECIFICATION

(11) **EP 3 543 884 B1**
(45) Date of publication and mention of the grant of the patent: **21.10.2026**
(21) Application number: 17871422.6
(22) Date of filing: 31.10.2017
(51) Int. Cl.: G06F 21/57, G06F 21/60, G06F 21/64, H04L 9/32, G06F 21/51

(54) **METHOD AND SYSTEM FOR PROTECTING SYSTEM PARTITION KEY DATA, AND TERMINAL**
VERFAHREN UND SYSTEM ZUM SCHUTZ VON SYSTEMPARTITIONSSCHLÜSSELDATEN UND ENDGERÄT
PROCÉDÉ ET SYSTÈME DE PROTECTION DE DONNÉES DE CLÉ DE PARTITION DE SYSTÈME ET TERMINAL

(30) Priority: 21.11.2016 CN 201611048270
(43) Date of publication of application: 25.09.2019
(73) Proprietor: Huizhou TCL Mobile Communication Co., Ltd., Huizhou, Guangdong 516006 (CN)
(72) Inventor: LING, Xiaorong, HuiZhou Guangdong 516006 (CN); WEI, Yajiao, HuiZhou Guangdong 516006 (CN); HUANG, Yunqing, HuiZhou Guangdong 516006 (CN); ZHENG, Jinguo, HuiZhou Guangdong 516006 (CN); HUANG, Zeming, HuiZhou Guangdong 516006 (CN); ZHONG, Haibo, HuiZhou Guangdong 516006 (CN)
(74) Representative: Patentanwälte Olbricht Buchhold Keulertz
(86) International application number: PCT/CN2017/108701
(87) International publication number: WO 2018/090823

(56) References cited:
- CN-A- 1 469 238
- CN-A- 103 927 490
- CN-A- 106 778 283
- US-A1- 2013 173 898
- US-A1- 2013 227 263
- US-A1- 2014 281 354
- US-A1- 2014 325 644

## Description

### CROSS REFERENCE

This application claims the priority of Chinese Patent Application No. 201611048270.5, entitled "Protection method and protection system of system partition key data and terminal", filed on November 21, 2016.

### TECHNICAL FIELD OF THE INVENTION

The present invention relates to the field of terminal equipment, and more particularly to a protection method and a protection system of system partition key data and a terminal.

### BACKGROUND OF THE INVENTION

In recent years, the popularity of Android smart phones has become higher and higher, and the user experience has become better and better. However, system security issues have always been the focus of users and operators. Google and various mobile phone solution providers have also made many improvements in security, for example, partition encryption, security version verification and other solutions. However, for system partition, the partition file cannot be encrypted because it is too large. At present, Google only provides the DM-verity mechanism to ensure the data security of the system partition. This mechanism is an open source project and can be closed with the adb command under certain conditions. Thus, when some data files in the system partition are cracked (such as files that record system properties), it is equivalent to the cracking of the entire system, so that the security of the system is affected. US 2014/325644A1 is a related art in this field.

Therefore, the prior art has yet to be improved.

### SUMMARY OF THE INVENTION

The invention is set out in the independent claims.

### BRIEF DESCRIPTION OF THE DRAWINGS

FIG. 1 is a flowchart of a protection method of system partition key data according to the preferred implementation of the present invention.
FIG. 2 is a structural diagram of a protection system of system partition key data according to the present invention.
FIG. 3 is a structural diagram of a terminal according to the embodiment of the present invention.

### DETAILED DESCRIPTION OF THE INVENTION

The present invention provides a protection method and a protection system of system partition key data and a terminal. For the purpose, technical solutions and advantages of the present invention will become clear, unambiguous, embodiments of the present invention is described in further detail below with reference to the accompanying drawings simultaneously. It should be understood that the specific embodiments described herein are merely for explaining the present invention and are not intended to limit the present invention.

In the present invention, the use of suffixes, such as "module", "component" or "unit" for indicating an element is merely an explanation for facilitating the present invention, and does not have a specific meaning per se. Thus, "module", "component" or "unit" can be used, alternately for one another.

The terminal device can be implemented in various forms. For example, the terminals described in the present invention may include, a mobile terminal, such as a mobile phone, a smart phone, a notebook computer, a digital broadcast receiver, a PDA (Personal Digital Assistant), a PAD (Tablet), a PMP (Portable Multimedia Player) and a navigation device and a fixed terminal, such as digital television and a desktop computer for illustration. However, those skilled in the art will appreciate that configurations in accordance with embodiments of the present invention can be applied to fixed type terminals in addition to components that are specifically for mobile purposes.

The content of the invention will be further described by the following description of embodiments with reference to the accompanying drawings.

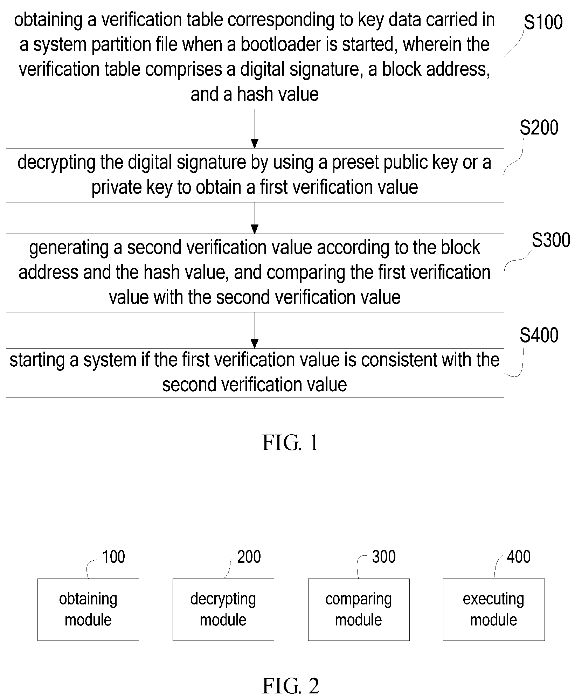

Please refer to FIG. 1. FIG. 1 is a flowchart of a protection method of system partition key data according to the preferred implementation of the present invention. The method includes:
Step S101, obtaining a verification table corresponding to key data carried in a system partition file when a bootloader is started, wherein the verification table includes a digital signature, a block address, and a hash value;
Step S102, decrypting the digital signature by using a preset public key or a private key to obtain a first verification value;
Step S103, generating a second verification value according to the block address and the hash value of the key data, and comparing the first verification value with the second verification value; and
Step S104, starting a system if the first verification value is consistent with the second verification value.

In this embodiment, when the bootloader is started, the verification table of the key data carried in the system partition file is parsed to obtain a digital signature, a block address and a hash value; the digital signature is decrypted to obtain a first verification value, and a second verification value is generated according to the block address and the hash value; whether the key data is tampered with is determined by comparing the first verification value with the second verification value to determine whether to start the system. Further, whether the storage address of the key data changes is determined, and the system is normally started when the storage address of the key data has not changed. Thus, the system is started normally when the key data has not been tampered and the storage address has not changed. The invention performs the verification of the key data instead performing the verification of the entire system file partition first, and then loading the system file; thus, the time of reading the entire system file partition for greatly reducing the system booting time and meanwhile, protecting the system.

Specifically, in Step S101, the key data is preset as a part of the system partition file, for example, a file that records system properties. Namely, the key data is a system partition file.

In Step S102, the public key or the private key is carried in the bootloader startup program, and is used to decrypt the digital signature. The public key or private key corresponds to a private key or a public key that encrypts the first verification value during system compilation.

In Step S103, the block address and the Hash value are the block address and the hash value carried in the verification table in the system partition file according to the block address (Key Blocks) and the hash value (Key Hash). The step of generating the second verification value according to the block address and the hash value specifically includes: placing the hash value after the block address to form a second to-be-verified value (Key Blocks+Key Hash), and using an EVP series function provided in an openssl library to calculate a SHA256 hash value of address as the second verification value. In practical applications, when the content corresponding to the block address (Key Blocks) is too large, the content may be read in units of 4K, and each segment of content is inputted into the EVP function, and finally a SHA256 hash value is outputted. The SHA256 hash value obtained by the segment input is equivalent to directly calculating the SHA256 hash value for the entire content, so that the SHA256 hash value obtained by the segment input is recorded as the second verification value. Specifically, the method for generating the second verification value according to the block address and the hash value is the same as the method for generating the first verification value, so that whether the system partition key data file is tampered with can be determined according to the consistency of the first verification value and the second verification value, thereby determining the security of the system.

In Step S104, the first verification value is consistent with the second verification, and the key data file is considered to have not been tampered with, and the system can be started normally. Certainly, it is determined that a file of the key data is tampered with when the first verification value is inconsistent with the second verification value, and then automatically shutting down the system.

In one embodiment of the present invention, Step S104: starting the system if the first verification value is consistent with the second verification value includes:
Step S1041, calculating a current hash value of the key data according to the block address if the first verification value is consistent with the second verification value;
Step S1042, comparing the current hash value with the hash value and starting the system when the current hash value is consistent with the hash value.

In this embodiment, when the first verification value and the second verification value are consistent, the hash value carried in the verification table is compared with the current hash value calculated according to the block address, which further improves the security of the system.

### Embodiment one

The embodiment provides a protection method of system partition key data, specifically including:
Step S201, generating a mapping file that records all files of system partition and corresponding block addresses when compiling a system file;
Step S202, determining the block address corresponding to the key data according to the mapping file and calculating the hash value of the key data corresponding to the block address;
Step S203, generating the first verification value according to the block address and the hash value, and encrypting the first verification value by using the preset private key or the public key to obtain the digital signature;
Step S204, storing the digital signature, the block address, and the hash value in the verification table, and appending the verification table to the system file;
Step S205, obtaining a verification table corresponding to key data carried in a system partition file when a bootloader is started;
Step S206, decrypting the digital signature by using a preset public key and a private key to obtain a first verification value;
Step S207, generating a second verification value according to the block address and the hash value, and comparing the first verification value with the second verification value; and
Step S208, starting a system if the first verification value is consistent with the second verification value.

In the protection method of system partition key data provided by the present embodiment, first, when a system partition file is compiled, a mapping file, in which all files of the system partition and corresponding block addresses are recorded, is generated, and according to the mapping file, the block address corresponding to the key data is determined, and the first verification value is generated according to the block address, and the digital signature is generated by using the public key or the private key. The digital signature, the block address and the hash value carried in the system partition file when the bootloader is started, and the digital signature is decrypted by using the preset public key or the private key to obtain the first verification value. Meanwhile, the second verification value is generated according to the block address and the hash value. Whether the key data file is tampered with can be determined according to the first verification value and the second verification value, thereby determining the security of the system.

Specifically, in Step S201, when compiling the system file, the mapping file that records all files of system partition and corresponding block addresses is generated. The name of the system partition file and the corresponding block address are recorded in the mapping file. Namely, the mapping file records the name of the system partition file, the block address and the correspondence between the name of the system partition file and the block address. In the mapping file, the corresponding block address can be determined according to the name of the system partition file, and the corresponding name of the system partition file can also be determined according to the block address. Thus, the block address corresponding to the key data file can be parsed from the mapping file. In the practical application, the content selection of the mapping file may be:
/system/xbin/tcpdump 293974-294294
/system/xbin/taskstats 293969-293972
/system/xbin/su 293965-293967
/system/xbin/strace 293801-293963
/system/xbin/sqlite3 293781-293799
/system/xbin/simpleperf 293680-293779.

In Step S202, the block address (Key Blocks) is usually a range of addresses recorded in the xxx-xxx format. Calculating the hash value of the block address may use the EVP series function provided in the openssl library to calculate the SHA256 hash value of the address. If the content corresponding to the address is too large, the content may be read in units of 4K in segment to be inputted into the EVP function, and finally a SHA256 hash value is outputted. The final result is equivalent to directly calculating the SHA256 hash value for the entire content. The pseudo code for calculating the SHA256 hash value using the EVP may be:

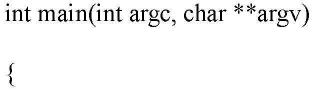

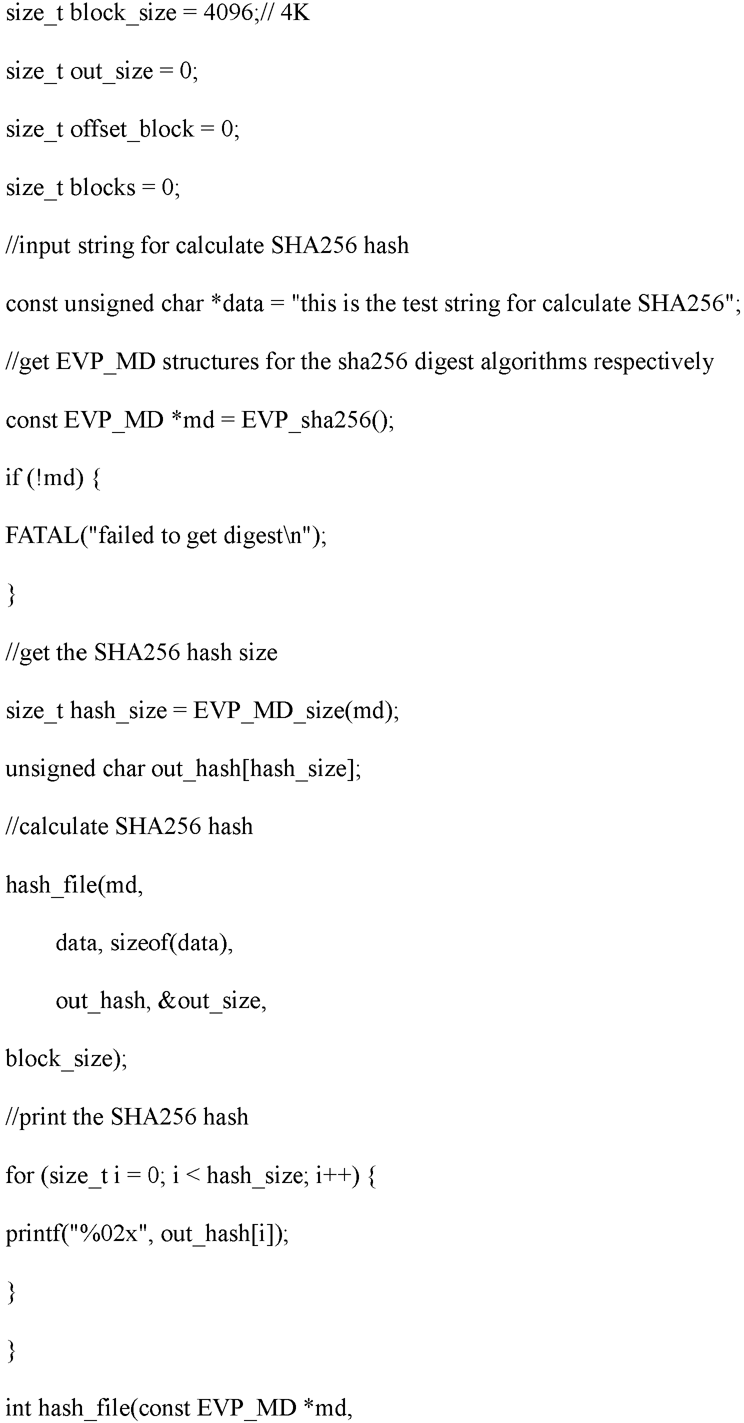

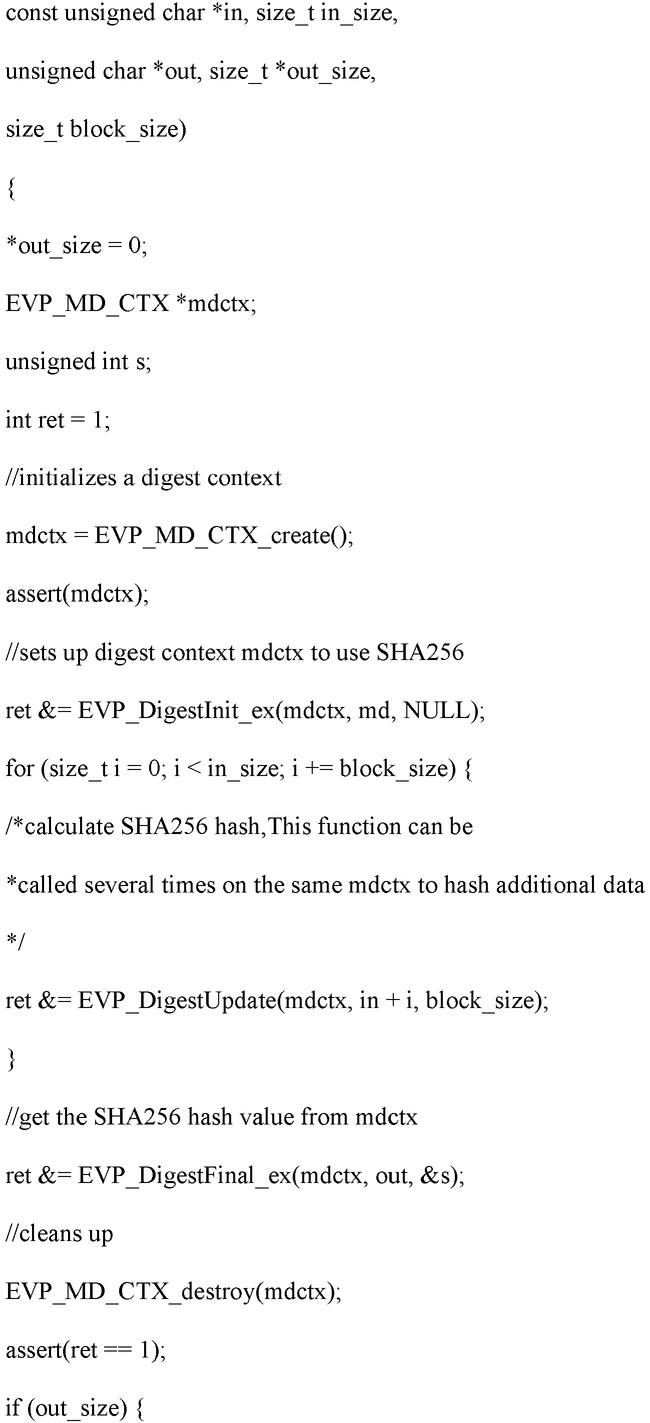

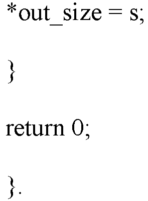

In Step S203, generating the first verification value according to the block address and the hash value may determine the first verification value by using the RSA2048 algorithm, and the first verification value is encrypted by using a private key or a public key pre-generated to obtain the digital signature (Signature). The calculation method of the digital signature (Signature) adopts a standard RSA signature process, which is specifically: obtaining the content to be signed [Key Blocks + Key Hash], and then using the RSA2048 algorithm to sign the aforesaid content to obtain the digital signature (Signature). Specifically, the private or the public key used for the encryption is paired with the public key or the private key used for subsequent decryption.

Illustratively, generating the first verification value according to the block address and the hash value, and encrypting the first verification value by using the preset private key or the public key to obtain the digital signature specifically can includes:
Step S2031, placing the hash value after the block address to generate a first to-be-verified value, and calculating a hash value of the first to-be-verified value to obtain the first verification value;
Step S2032, encrypting the first verification value by using the preset private key or the public key to obtain the digital signature.

In another embodiment of the present invention, in order to facilitate obtaining the public key or the private key corresponding to the private key or the public key when the bootloader is started, Step S204 may further include: compiling the public key or the private key corresponding to the private key or the public key into the bootloader in an array form, so that the digital signature is decrypted by using the public key or the private key when starting the bootloader.

The present invention further provides a protection system of system partition key data, as shown in FIG 2, including:
an obtaining module 100, obtaining a verification table corresponding to key data carried in a system partition file when a bootloader is started, wherein the verification table includes a digital signature, a block address, and a hash value;
a decrypting module 200, decrypting the digital signature by using a preset public key or a private key to obtain a first verification value;
a comparing module 300, generating a second verification value according to the block address and the hash value of the key data, and comparing the first verification value with the second verification value; and
an executing module 400, starting a system if the first verification value is consistent with the second verification value.

In the protection system of system partition key data, the executing module includes:
a calculating unit, calculating a current hash value of the key data according to the block address if the first verification value is consistent with the second verification value;
an executing unit, comparing the current hash value with the hash value and starting the system when the current hash value is consistent with the hash value.

The protection system of system partition key data further includes:
a generating module, generating a mapping file that records all files of system partition and corresponding block addresses when compiling a system file;
a calculating module, determining the block address corresponding to the key data according to the mapping file and calculating the hash value of the key data corresponding to the block address;
an encrypting module, generating the first verification value according to the block address and the hash value, and encrypting the first verification value by using the preset private key or the public key to obtain the digital signature;
a storing module, storing the digital signature, the block address, and the hash value in the verification table, and appending the verification table to the system file.

In the protection system of system partition key data, the encrypting module includes:
a generating unit, placing the hash value after the block address to generate a first to-be-verified value, and calculating a hash value of the first to-be-verified value to obtain the first verification value;
an encrypting unit, encrypting the first verification value by using the preset private key or the public key to obtain the digital signature, wherein the private key is a private key corresponding to the public key.

The protection system of system partition key data further includes:
a compiling module, compiling the public key or the private key corresponding to the private key or the public key into the bootloader in an array form, so that the digital signature is decrypted by using the public key or the private key when starting the bootloader.

The foregoing various modules of the protection system of the system partition key data have been described in detail in the aforesaid method, and will not be repeatedly described herein.

Besides, in several embodiments provided by the present invention, it should be understood that the disclosed system and method may be implemented in other ways. As an illustration, the embodiment of the device described above is merely illustrative. For example, the division of the module is only a logical function division and there are additional ways of actual implement, such as, multiple units or components may be combined or can be integrated into another system. Or, some feature can be ignored or not executed. In addition, the coupling, the direct coupling or the communication connection shown or discussed may be either an indirect coupling or a communication connection through some interfaces, devices or units, or may be electrically, mechanically or otherwise connected.

The units described as the separation means may or may not be physically separated. The components shown as units may or may not be physical units, i.e., may be located in one place or may be distributed over a plurality of network units. The part or all of the units can be selected according to the actual demands to achieve the object of the present embodiment.

The respective function units in the respective embodiments of the present invention can be integrated in one process unit, or the individual units are physically presented, or two or more units are integrated in one unit. The foregoing integrated units can be implemented in the form of hardware or in the form of a hardware and a software functional unit.

The aforesaid integrated unit implemented in the form of a software functional unit can be stored in a computer readable storage medium. The software functional unit described above is stored in a storage medium and includes instructions for causing a computer device (which may be a personal computer, a server, or a network device, etc.) or a processor to perform some steps of the methods of the various embodiments of the present invention. The foregoing storage medium includes: a U disk, a mobile hard disk, a read-only memory (ROM), a random access memory (RAM), a magnetic disk, or an optical disk, which can store program codes.

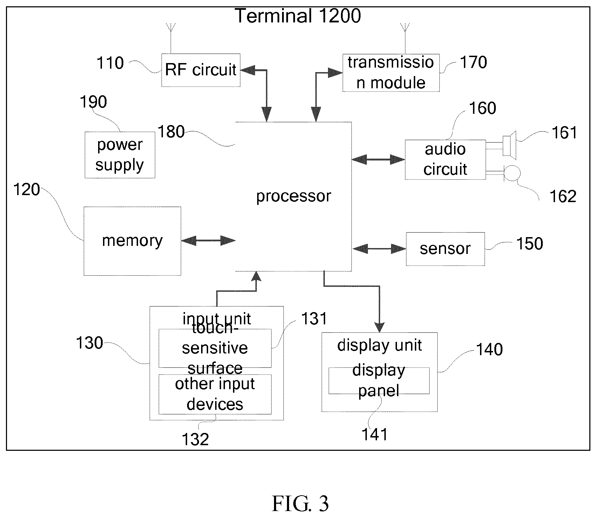

FIG. 3 shows a structural diagram of a terminal according to the embodiment of the present invention. The terminal can be used to implement the protection method and the protection system of system partition key data provided in the foregoing embodiments. The terminal 1200 can be a smart phone or a tablet.

As shown in FIG. 3, the terminal 1200 may include an RF (Radio Frequency) circuit 110, a memory 120 including one or more (only one shown) computer-readable storage medium, an input unit 130, a display unit 140, a sensor 150, an audio circuit 160, a transmission module 170, a processor 180 including one or more processing core (only one shown in the figure) and a power supply 190. It will be understood by those skilled in the art that the structure of the terminal 1200 shown in FIG 3 does not constitute a limitation of the terminal 1200, and may include more or less components than those illustrated, or a combination of certain components, or different component arrangements.

The RF circuit 110 is configured to receive and transmit electromagnetic waves, and to realize mutual conversion between electromagnetic waves and electrical signals, thereby communicating with a communication network or other devices. The RF circuit 110 may include various existing circuit elements for performing these functions, such as an antenna, a radio frequency transceiver, a digital signal processor, an encryption/decryption chip, a Subscriber Identity Module (SIM) card and a memory. The RF circuit 110 can communicate with various networks such as the Internet, an intranet, a wireless network, or communicate with other devices over a wireless network. The wireless network described above may include a cellular telephone network, a wireless local area network or a metropolitan area network. The aforesaid wireless network can use various communication standards, protocols and technologies, including but not limited to Global System for Mobile Communication (GSM), Enhanced Data GSM Environment (EDGE), and wideband code. Wideband Code Division Multiple Access (WCDMA), Code Division Access (CDMA), Time Division Multiple Access (TDMA), Wireless Fidelity (Wi-Fi) (such as the Institute of Electrical and Electronics Engineers Standard IEEE 802.11a, IEEE 802.11b, IEEE 802.11g and / or IEEE 802.11n), Voice over Internet Protocol (VoIP), Worldwide Interoperability for Microwave Access, Wi-Max), other protocols for mail, instant messaging, and short messages, as well as any other suitable communication protocol, may even include protocols that are not currently being developed.

The memory 120 can be used to store software programs and modules, such as program instructions and modules corresponding to the protection method and the protection system of system partition key data in the foregoing embodiment. The processor 180 executes each of the software programs and modules stored in the memory 120, thereby performing various functional applications and data processing, that is, achieving the function of protecting the system partition key data. The memory 120 can include high speed random access memory, and can also include non-volatile memory, such as one or more magnetic storage devices, flash memory or other non-volatile solid state memory. In some embodiments, memory 120 can further include a memory remotely located relative to the processor 180, which can be connected to terminal 1200 via a network. The embodiments of aforesaid networks include, but are not limited to, the Internet, an intranet, a local area network, a mobile communication network and combinations thereof.

The input unit 130 can be configured to receive input numeric or character information and to generate keyboard, mouse, joystick, optical or trackball signal inputs related to user settings and function controls. In particular, the input unit 130 can include a touch-sensitive surface 131 as well as other input devices 132. The touch-sensitive surface 131, also referred to as a touch display or trackpad, can collect touch operations on or near the user (e.g., the user uses a finger, stylus, etc., any suitable object or accessory on the touch-sensitive surface 131 or the operation near the touch-sensitive surface 131) and can drive the corresponding connected device according to a preset program. Optionally, the touch-sensitive surface 131 can include two portions of a touch detection device and a touch controller. The touch detection device detects a touch orientation of the user, and detects a signal caused by the touch operation, and then transmits a signal to the touch controller; the touch controller receives the touch information from the touch detection device, and converts the touch information into contact coordinates, and then sends the same to the processor 180, and can receive commands from the processor 180 and execute the same. In addition, the touch-sensitive surface 131 can be implemented in various types such as resistive, capacitive, infrared and surface acoustic waves. In addition to the touch-sensitive surface 131, the input unit 130 can also include other input devices 132. Specifically, the other input devices 132 may include, but are not limited to, one or more of a physical keyboard, function keys (such as volume control buttons, switch buttons, etc.), trackballs, mice and joysticks.

The display unit 140 can be used to display information entered by the user or the information provided for the user and various graphical user interfaces of terminal 1200, which can be constructed from graphics, text, icons, video and any combination thereof. The display unit 140 may include a display panel 141. Optionally, the display panel 141 may be configured in a form of an LCD (Liquid Crystal Display) or an OLED (Organic Light-Emitting Diode). Furthermore, the touch-sensitive surface 131 may cover the display panel 141. When the touch-sensitive surface 131 detects a touch operation thereon or nearby, the operation is transmitted to the processor 180 to determine the type of the touch event, and then the processor 180 provides a corresponding visual output on the display panel 141 depending on the type of touch event. Although in FIG 3, touch-sensitive surface 131 and display panel 141 are implemented as two separate components for achieving input function and input function. In some embodiments, the touch-sensitive surface 131 can be integrated with the display panel 141 for achieving input function and input function.

The terminal 1200 can also include at least one type of sensor 150, such as a light sensor, motion sensor and other sensors. Specifically, the light sensor may include an ambient light sensor and a proximity sensor, wherein the ambient light sensor may adjust the brightness of the display panel 141 according to the brightness of the ambient light, and the proximity sensor may power off the display panel 141 and/or the backlight when the terminal 1200 is moved to the ear. As one motion sensor, the gravity acceleration sensor can detect the magnitude of acceleration in various directions (usually three axes). When it is stationary, it can detect the magnitude and direction of gravity. It can be used to identify the gesture of the mobile phone (such as horizontal and vertical screen switching, related game, magnetometer attitude calibration), vibration recognition related functions (such as pedometer and tapping) and etc.; the terminal 1200 can also be configured with gyroscopes, barometers, hygrometers, thermometers, infrared sensors and other sensors, and details are not described here.

The audio circuit 160, the speaker 161 and the microphone 162 can provide an audio interface between the user and the terminal 1200. The audio circuit 160 can transmit the converted electrical signal of the audio data to the speaker 161, and the speaker 161 converts the electrical signal into a sound signal for outputting; on the other hand, the microphone 162 converts the collected sound signal into an electrical signal, which is received by the audio circuit 160 and is converted into audio data, and then the audio data is outputted to the processor 180 for processing, and then, is transmitted to another terminal for illustration through the RF circuit 110. Alternatively, the audio data is outputted to the memory 120 for further processing. The audio circuit 160 may also include an ear plug jack to provide communication of the peripheral earphones with the terminal 1200.

The terminal 1200 can help the user to send and receive emails, browse web pages, access streaming media, etc. through the transmission module 170 (such as a Wi-Fi module), which provides wireless broadband internet access to the user. Although FIG. 3 shows the transmission module 170, it can be understood that it does not belong to the essential configuration of the terminal 1200, and may be omitted as needed within the scope of not changing the essence of the invention.

The processor 180 is a control center of the terminal 1200 that connects various portions of the entire mobile phone with various interfaces and wires. By running or executing software programs and/or modules stored in the memory 120, and invoking the data stored in the memory 120, the various functions of the terminal 1200 is performed and the data is processed to perform overall monitoring of the mobile phone. Optionally, the processor 180 may include one or more processing cores; in some embodiments, the processor 180 can integrate an application processor and a modem processor, wherein the application processor primarily processes an operating system, a user interface, an application, etc., and the modem processor primarily processes the wireless communications. It can be understood that the aforesaid modem processor may not be integrated into the processor 180.

The terminal 1200 also includes the power supply 190 (such as a battery) that supplies powers for the various components. In some embodiments, the power supply can be logically coupled to the processor 180 through a power management system to manage charging, discharging and power consumption management through the power management system. The power supply 190 may also include an arbitrary combination of any one or more of a DC or AC power source, a recharging system, a power failure detection circuit, a power converter or inverter and a power status indicator.

Although not shown, the terminal 1200 may further include a camera (such as a front camera, a rear camera) and a Bluetooth module, and details are not described here. Specifically, in this embodiment, the display unit of the terminal is a touch screen display. The terminal further includes a memory, and one or more programs, wherein the one or more programs are stored in the memory and configured to be executed by one or more processors, the one or more programs include instructions for executing the following operations:
obtaining a verification table corresponding to key data carried in a system partition file when a bootloader is started, wherein the verification table includes a digital signature, a block address, and a hash value;
decrypting the digital signature by using a preset public key or a private key to obtain a first verification value;
generating a second verification value according to the block address and the hash value of the key data, and comparing the first verification value with the second verification value; wherein generating the second verification value specifically includes: placing the hash value after the block address to form a second to-be-verified value, and using an EVP series function provided in an openssl library to calculate a SHA256 hash value of address as the second verification value;
starting a system if the first verification value is consistent with the second verification value; and
determining that a file of the key data is tampered with when the first verification value is inconsistent with the second verification value, and automatically shutting down the terminal.

Furthermore, the step of starting the system if the first verification value is consistent with the second verification value includes:
calculating a current hash value of the key data according to the block address if the first verification value is consistent with the second verification value;
comparing the current hash value with the hash value and starting the system when the current hash value is consistent with the hash value.

Furthermore, before the step of obtaining the verification table corresponding to the key data carried in the system partition file when the bootloader is started, wherein the verification table includes the digital signature, the block address and the hash value, further including:
generating a mapping file that records all files of system partition and corresponding block addresses when compiling a system file;
determining the block address corresponding to the key data according to the mapping file and calculating the hash value of the key data corresponding to the block address;
generating the first verification value according to the block address and the hash value, and encrypting the first verification value by using the preset private key or the public key to obtain the digital signature;
storing the digital signature, the block address, and the hash value in the verification table, and appending the verification table to the system file.

Furthermore, the step of generating the first verification value according to the block address and the hash value, and encrypting the first verification value by using the preset private key or the public key to obtain the digital signature includes:
placing the hash value after the block address to generate a first to-be-verified value, and calculating a hash value of the first to-be-verified value to obtain the first verification value;
encrypting the first verification value by using the preset private key or the public key to obtain the digital signature, wherein the private key is a private key corresponding to the public key.

Furthermore, after the step of storing the digital signature, the block address, and the hash value in the verification table, and appending the verification table to the system file, further including:
compiling the public key or the private key corresponding to the private key or the public key into the bootloader in an array form, so that the digital signature is decrypted by using the public key or the private key when starting the bootloader.

It should be noted that the above embodiments are only used to illustrate the technical solutions of the present invention, and are not limited thereto; although the present invention has been described in detail with reference to the foregoing embodiments, those skilled in the art should understand that the technical solutions described in the foregoing embodiments may be modified, or some of the technical features may be equivalently replaced; and the modifications or replacements do not deviate from the scope of the technical solutions of the embodiments of the present invention.

## Claims

1. A computer implemented protection method of system partition key data, comprising:
obtaining a verification table corresponding to key data carried in a system partition file when a bootloader is started, wherein the key data is a file that records system properties, and the verification table comprises a digital signature, a block address, and a hash value of a content corresponding to the block address;
decrypting the digital signature by using a preset public key to obtain a first verification value;
generating a second verification value according to the block address and the hash value carried on the verification table, and comparing the first verification value with the second verification value; and
starting a system if the first verification value is consistent with the second verification value,
wherein before the obtaining step, the method comprises:
generating a mapping file that records all files of system partition and corresponding block addresses when compiling a system file;
determining the block address corresponding to the key data according to the mapping file and calculating the hash value of the key data corresponding to the block address;
placing the hash value of the key data after the block address to generate a first to-be-verified value, and calculating a hash value of the first to-be-verified value to obtain the first verification value;
encrypting the first verification value by using a preset private key to obtain the digital signature, wherein the private key is a private key corresponding to the public key; and
storing the digital signature, the block address, and the hash value of the key data in the verification table, and appending the verification table to the system file,
wherein the generating the second verification value according to the block address and the hash value carried on the verification table comprises:
placing the hash value carried on the verification table after the block address to form a second to-be-verified value, and calculating a hash value of the second to-be-verified value to obtain the second verification value.

2. The protection method of system partition key data according claim 1, wherein the step of starting the system if the first verification value is consistent with the second verification value comprises:
calculating a current hash value of the key data according to the block address if the first verification value is consistent with the second verification value;
comparing the current hash value with the hash value carried on the verification table and starting the system when the current hash value is consistent with the hash value.

3. The protection method of system partition key data according to claim 1, wherein after the step of storing the digital signature, the block address, and the hash value of the key data in the verification table, and appending the verification table to the system file, the protection method further comprises:
compiling the private key corresponding to the public key into the bootloader in an array form, so that the digital signature is decrypted by using the public key when starting the bootloader.

4. A protection system of system partition key data, comprising:
one or more processors;
a memory; and
one or more application programs, wherein the one or more application programs are stored in the memory and executed by the processor; and the one or more application programs comprises:
an obtaining module, obtaining a verification table corresponding to key data carried in a system partition file when a bootloader is started, wherein the key data is a file that records system properties, and the verification table comprises a digital signature, a block address, and a hash value of a content corresponding to the block address;
a decrypting module, decrypting the digital signature by using a preset public key to obtain a first verification value;
a comparing module, generating a second verification value according to the block address and the hash value carried on the verification table, and comparing the first verification value with the second verification value; and
a executing module, starting a system if the first verification value is consistent with the second verification value,
wherein the system further comprises:
a generating module, generating a mapping file that records all files of system partition and corresponding block addresses when compiling a system file;
a calculating module, determining the block address corresponding to the key data according to the mapping file and calculating the hash value of the key data corresponding to the block address;
a generating unit, placing the hash value of the key data after the block address to generate a first to-be-verified value, and calculating a hash value of the first to-be-verified value to obtain the first verification value;
an encrypting unit, encrypting the first verification value by using a preset private key to obtain the digital signature, wherein the private key is a private key corresponding to the public key; and
a storing module, storing the digital signature, the block address, and the hash value of the key data in the verification table, and appending the verification table to the system file,
wherein the generating the second verification value according to the block address and the hash value carried on the verification table, performed by the comparing module, comprises:
placing the hash value carried on the verification table after the block address to form a second to-be-verified value, and calculating a hash value of the second to-be-verified value to obtain the second verification value.

5. The protection system of system partition key data according to claim 4, wherein the executing module comprises:
a calculating unit, calculating a current hash value of the key data according to the block address if the first verification value is consistent with the second verification value;
an executing unit, comparing the current hash value with the hash value carried on the verification table and starting the system when the current hash value is consistent with the hash value.

6. The protection system of system partition key data according to claim 4, further comprising:
a compiling module, compiling the private key corresponding to the public key into the bootloader in an array form, so that the digital signature is decrypted by using the public key when starting the bootloader.

## Patentansprüche

1. Ein computerimplementiertes Verfahren zum Schutz von Daten zu Systempartitionsschlüsseln, umfassend:
Abrufen einer Verifizierungstabelle, die den in einer Systempartitionsdatei enthaltenen Schlüsseldaten entspricht, wenn ein Bootloader gestartet wird, wobei es sich bei den Schlüsseldaten um eine Datei handelt, in der Systemeigenschaften gespeichert sind, und die Verifizierungstabelle eine digitale Signatur, eine Blockadresse und einen Hash-Wert eines der Blockadresse entsprechenden Inhalts umfasst;
Entschlüsseln der digitalen Signatur unter Verwendung eines voreingestellten öffentlichen Schlüssels, um einen ersten Verifizierungswert zu erhalten;
Erzeugen eines zweiten Verifizierungswerts auf der Grundlage der Blockadresse und des in der Verifizierungstabelle enthaltenen Hash-Werts sowie Vergleichen des ersten Verifizierungswerts mit dem zweiten Verifizierungswert; und
Starten eines Systems, wenn der erste Verifizierungswert mit dem zweiten Verifizierungswert übereinstimmt,
wobei vor dem Abrufschritt das Verfahren Folgendes umfasst:
Erstellen einer Zuordnungsdatei, in der beim Kompilieren einer Systempartitionsdatei alle Dateien der Systempartition und die entsprechenden Blockadressen erfasst werden;
Ermitteln der den Schlüsseldaten entsprechenden Blockadresse gemäß der Zuordnungsdatei und Berechnen des Hash-Werts der den Blockadresse entsprechenden Schlüsseldaten;
Einfügen des Hash-Werts der Schlüsseldaten hinter die Blockadresse, um einen ersten zu überprüfenden Wert zu erzeugen, und Berechnen eines Hash-Werts des ersten zu überprüfenden Werts, um den ersten Verifizierungswert zu erhalten;
Verschlüsseln des ersten Verifizierungswerts unter Verwendung eines voreingestellten privaten Schlüssels, um die digitale Signatur zu erhalten, wobei der private Schlüssel dem öffentlichen Schlüssel entspricht; und
Speichern der digitalen Signatur, der Blockadresse und des Hash-Werts der Schlüsseldaten in der Verifizierungstabelle,
und Anhängen der Verifizierungstabelle an die Systempartitionsdatei,
wobei das Erzeugen des zweiten Verifizierungswerts anhand der Blockadresse und des in der Verifizierungstabelle enthaltenen Hash-Werts Folgendes umfasst:
setzen des in der Verifizierungstabelle enthaltenen Hash-Werts hinter die Blockadresse, um einen zweiten zu überprüfenden Wert zu bilden, und
Berechnen eines Hash-Werts des zweiten zu überprüfenden Werts, um den zweiten Verifizierungswert zu erhalten.

2. Verfahren zum Schutz von Daten des Systempartitionsschlüssels gemäß Anspruch 1, wobei falls der erste Verifizierungswert mit dem zweiten Verifizierungswert übereinstimmt, der Schritt des Startens des Systems Folgendes umfasst:
Berechnen eines aktuellen Hash-Werts der Schlüsseldaten anhand der Blockadresse, sofern der erste Verifizierungswert mit dem zweiten Verifizierungswert übereinstimmt;
Starten es aktuellen Hash-Werts mit dem in der Verifizierungstabelle gespeicherten Hash-Wert zu vergleichen und das System, wenn der aktuelle Hash-Wert mit dem Hash-Wert übereinstimmt.

3. Verfahren zum Schutz von Schlüsseldaten der Systempartition gemäß Anspruch 1, wobei nach dem Schritt des Speicherns der digitalen Signatur, der Blockadresse und des Hash-Werts der Schlüsseldaten in der Verifizierungstabelle sowie des Anhängens der Verifizierungstabelle an die Systempartitionsdatei das Verfahren ferner Folgendes umfasst:
Einbinden es zum öffentlichen Schlüssel gehörenden privaten Schlüssels in Form eines Arrays in den Bootloader, sodass die digitale Signatur beim Starten des Bootloaders mithilfe des öffentlichen Schlüssels entschlüsselt wird.

4. Ein Schutzsystem für Daten von Systempartitionsschlüsseln, umfassend:
ein oder mehrere Prozessoren;
eine Erinnerung; und
ein oder mehrere Anwendungsprogramme, wobei das eine oder die mehreren Anwendungsprogramme im Speicher gespeichert sind und vom Prozessor ausgeführt werden; und das eine oder die mehreren Anwendungsprogramme umfassen:
ein Abrufmodul, das beim Start eines Bootloaders eine Verifizierungstabelle abruft, die den in einer Systempartitionsdatei enthaltenen Schlüsseldaten entspricht, wobei die Schlüsseldaten eine Datei sind, die Systemeigenschaften aufzeichnet, und die Verifizierungstabelle eine digitale Signatur, eine Blockadresse und einen Hash-Wert eines der Blockadresse entsprechenden Inhalts umfasst;
ein Entschlüsselungsmodul, das die digitale Signatur unter Verwendung eines voreingestellten öffentlichen Schlüssels entschlüsselt, um einen ersten Verifizierungswert zu erhalten;
ein Vergleichsmodul, das einen zweiten Verifizierungswert entsprechend der Blockadresse und dem in der Verifizierungstabelle enthaltenen Hash-Wert erzeugt und den ersten Verifizierungswert mit dem zweiten Verifizierungswert vergleicht; und
ein Ausführungsmodul, das ein System startet, wenn der erste Verifizierungswert mit dem zweiten Verifizierungswert übereinstimmt,
wobei das System ferner umfasst:
ein Generierungsmodul, das beim Kompilieren einer Systempartitionsdatei eine Zuordnungsdatei erstellt, in der alle Dateien der Systempartition und die entsprechenden Blockadressen erfasst werden;
ein Berechnungsmodul, das die den Schlüsseldaten entsprechende Blockadresse gemäß der Zuordnungsdatei ermittelt und den Hash-Wert der der Blockadresse entsprechenden Schlüsseldaten berechnet;
eine Erzeugungseinheit, die den Hash-Wert der Schlüsseldaten an die Blockadresse anhängt, um einen ersten zu überprüfenden Wert zu erzeugen, und die einen Hash-Wert des ersten zu überprüfenden Werts berechnet, um den ersten Verifizierungswert zu erhalten;
eine Verschlüsselungseinheit, die den ersten Verifizierungswert unter Verwendung eines voreingestellten privaten Schlüssels verschlüsselt, um die digitale Signatur zu erhalten, wobei der private Schlüssel ein dem öffentlichen Schlüssel entsprechender privater Schlüssel ist; und
ein Speichermodul, das die digitale Signatur, die Blockadresse und den Hash-Wert der Schlüsseldaten in der Verifizierungstabelle speichert und die Verifizierungstabelle an die Systempartitionsdatei anhängt,
wobei die vom Vergleichsmodul durchgeführte Erzeugung des zweiten Verifizierungswerts anhand der Blockadresse und des in der Verifizierungstabelle enthaltenen Hash-Werts Folgendes umfasst:
den in der Verifizierungstabelle enthaltenen Hash-Wert hinter die Blockadresse setzen, um einen zweiten zu überprüfenden Wert zu bilden, und
Berechnen eines Hash-Werts des zweiten zu überprüfenden Werts, um den zweiten Verifizierungswert zu erhalten.

5. Schutzsystem für Daten des Systempartitionsschlüssels nach Anspruch 4, wobei das Ausführungsmodul umfasst:
eine Recheneinheit, die einen aktuellen Hash-Wert der Schlüsseldaten entsprechend der Blockadresse berechnet, wenn der erste Verifizierungswert mit dem zweiten Verifizierungswert übereinstimmt;
eine Ausführungseinheit, die den aktuellen Hash-Wert mit dem in der Verifizierungstabelle gespeicherten Hash-Wert vergleicht und das System startet, wenn der aktuelle Hash-Wert mit dem Hash-Wert übereinstimmt.

6. Schutzsystem für Systempartitionsschlüsseldaten nach Anspruch 4, das ferner umfasst:
ein Kompilierungsmodul, das den zum öffentlichen Schlüssel gehörenden privaten Schlüssel in Form eines Arrays in den Bootloader kompiliert, sodass die digitale Signatur beim Starten des Bootloaders mithilfe des öffentlichen Schlüssels entschlüsselt wird.

## Revendications

1. Procédé de protection, mis en œuvre par ordinateur, des données de clé de partition du système, comprenant :
obtenir une table de vérification correspondant aux données clés contenues dans un fichier de partition système lors du démarrage d'un chargeur d'amorçage, les données clés étant un fichier qui enregistre les propriétés du système, et la table de vérification comprenant une signature numérique, une adresse de bloc et une valeur de hachage d'un contenu correspondant à l'adresse de bloc ;
décrypter la signature numérique à l'aide d'une clé publique prédéfinie afin d'obtenir une première valeur de vérification ;
générer une deuxième valeur de vérification à partir de l'adresse du bloc et de la valeur de hachage figurant dans la table de vérification, et comparer la première valeur de vérification à la deuxième valeur de vérification ; et
démarrer un système si la première valeur de vérification correspond à la deuxième valeur de vérification,
dans lequel, avant l'étape d'obtention, le procédé comprend :
générer un fichier de mappage qui répertorie tous les fichiers de la partition système ainsi que les adresses de blocs correspondantes lors de la compilation d'un fichier de partition système ;
déterminer l'adresse du bloc correspondant aux données de clé à l'aide du fichier de mappage et calculer la valeur de hachage des données de clé correspondant à cette adresse de bloc ;
placer la valeur de hachage des données de la clé après l'adresse du bloc afin de générer une première valeur à vérifier, puis calculer une valeur de hachage de cette première valeur à vérifier pour obtenir la première valeur de vérification ;
chiffrer la première valeur de vérification à l'aide d'une clé privée prédéfinie afin d'obtenir la signature numérique, la clé privée étant une clé privée correspondant à la clé publique ; et
stocker la signature numérique, l'adresse du bloc et la valeur de hachage des données de la clé dans la table de vérification,
et ajouter la table de vérification au fichier de partition système,
dans lequel la génération de la deuxième valeur de vérification à partir de l'adresse de bloc et de la valeur de hachage contenue dans la table de vérification comprend :
en plaçant la valeur de hachage figurant dans la table de vérification après l'adresse du bloc afin de former une deuxième valeur à vérifier, et
calculer une valeur de hachage de la deuxième valeur à vérifier afin d'obtenir la deuxième valeur de vérification.

2. Procédé de protection des données de la clé de partition système selon la revendication 1, dans lequel l'étape consistant à démarrer le système si la première valeur de vérification correspond à la deuxième valeur de vérification comprend :
calculer une valeur de hachage actuelle des données de la clé en fonction de l'adresse du bloc si la première valeur de vérification correspond à la deuxième valeur de vérification ;
comparer la valeur de hachage actuelle à celle figurant dans la table de vérification et démarrer le système lorsque la valeur de hachage actuelle correspond à celle-ci.

3. Procédé de protection des données de clé de la partition système selon la revendication 1, dans lequel, après l'étape consistant à stocker la signature numérique, l'adresse du bloc et la valeur de hachage des données de clé dans la table de vérification, puis à ajouter la table de vérification au fichier de partition système, le procédé de protection comprend en outre :
intégrer la clé privée correspondant à la clé publique dans le chargeur d'amorçage sous forme de tableau, de sorte que la signature numérique soit déchiffrée à l'aide de la clé publique lors du démarrage du chargeur d'amorçage.

4. Système de protection des données de clé de partition du système, comprenant :
un ou plusieurs processeurs ;
une mémoire ; et
un ou plusieurs programmes d'application, ces programmes d'application étant stockés dans la mémoire et exécutés par le processeur ; et ces programmes d'application comprenant :
un module d'obtention, destiné à obtenir une table de vérification correspondant à des données clés contenues dans un fichier de partition système lors du démarrage d'un chargeur d'amorçage, lesdites données clés étant un fichier qui enregistre les propriétés du système, et la table de vérification comprenant une signature numérique, une adresse de bloc et une valeur de hachage d'un contenu correspondant à ladite adresse de bloc ;
un module de déchiffrement, chargé de déchiffrer la signature numérique à l'aide d'une clé publique prédéfinie afin d'obtenir une première valeur de vérification ;
un module de comparaison, générant une deuxième valeur de vérification à partir de l'adresse de bloc et de la valeur de hachage figurant dans la table de vérification, et comparant la première valeur de vérification à la deuxième valeur de vérification ; et
un module d'exécution, démarrant un système si la première valeur de vérification est conforme à la deuxième valeur de vérification,
dans lequel le système comprend en outre :
un module de génération, qui génère un fichier de mappage répertoriant tous les fichiers de la partition système ainsi que les adresses de blocs correspondantes lors de la compilation d'un fichier de partition système ;
un module de calcul, chargé de déterminer l'adresse de bloc correspondant aux données de clé conformément au fichier de mappage et de calculer la valeur de hachage des données de clé correspondant à cette adresse de bloc ;
une unité de génération, consistant à placer la valeur de hachage des données de clé après l'adresse du bloc afin de générer une première valeur à vérifier, puis à calculer la valeur de hachage de cette première valeur à vérifier pour obtenir la première valeur de vérification ;
une unité de chiffrement, qui chiffre la première valeur de vérification à l'aide d'une clé privée prédéfinie afin d'obtenir la signature numérique, la clé privée étant une clé privée correspondant à la clé publique ; et
un module de stockage, qui stocke la signature numérique, l'adresse du bloc et la valeur de hachage des données de clé dans la table de vérification, puis ajoute cette table à la fin du fichier de partition système,
dans lequel la génération de la deuxième valeur de vérification à partir de l'adresse de bloc et de la valeur de hachage figurant dans la table de vérification, effectuée par le module de comparaison, comprend :
en plaçant la valeur de hachage figurant dans la table de vérification après l'adresse du bloc afin de former une deuxième valeur à vérifier, et
calculer une valeur de hachage de la deuxième valeur à vérifier afin d'obtenir la deuxième valeur de vérification.

5. Système de protection des données de clé de la partition système selon la revendication 4, dans lequel le module d'exécution comprend :
une unité de calcul, chargée de calculer une valeur de hachage actuelle des données de clé en fonction de l'adresse du bloc si la première valeur de vérification correspond à la deuxième valeur de vérification ;
une unité d'exécution qui compare la valeur de hachage actuelle à celle contenue dans la table de vérification et qui démarre le système lorsque la valeur de hachage actuelle correspond à celle de la table.

6. Système de protection des données de clé de la partition système selon la revendication 4, comprenant en outre :
un module de compilation, qui compile la clé privée correspondant à la clé publique dans le chargeur d'amorçage sous forme de tableau, de sorte que la signature numérique soit déchiffrée à l'aide de la clé publique lors du démarrage du chargeur d'amorçage.
